# EUROPÄISCHE PATENTSCHRIFT

(11) **EP 3 587 152 B1**
(45) Veröffentlichungstag und Bekanntmachung des Hinweises auf die Patenterteilung: **06.03.2024**
(21) Anmeldenummer: 19179844.6
(22) Anmeldetag: 13.06.2019
(51) Int. Cl.: B60H 1/00, F24F 11/56, G05B 15/02, H05B 1/02

(54) **FAHRZEUGZUSATZGERÄTE-BEDIENSYSTEM**
VEHICLE ADD-ON CONTROL SYSTEM
SYSTÈME DE COMMANDE DES APPAREILS RAPPORTÉS DE VÉHICULE

(30) Priorität: 21.06.2018 DE 102018114906
(43) Veröffentlichungstag der Anmeldung: 01.01.2020
(73) Patentinhaber: Eberspächer Climate Control Systems GmbH, 73730 Esslingen (DE)
(72) Erfinder: Waniek, Felix, 73773 Aichwald (DE)
(74) Vertreter: Ruttensperger Lachnit Trossin Gomoll

(56) Entgegenhaltungen:
- DE-A1-102010 040 852
- DE-A1-102017 109 509
- US-A1- 2014 210 593
- US-A1- 2016 193 895
- US-A1- 2017 036 511

## Beschreibung

Die vorliegende Erfindung betrifft ein Fahrzeug mit einem Fahrzeugzusatzgeräte-Bediensystem, mit welchem mehrere in dem Fahrzeug, wie zum Beispiel einem Campingfahrzeug, untergebrachte oder unterzubringende Zusatzgeräte bedient werden können.

Vor allem beim Aufbau von Campingfahrzeugen ist es üblich, auf ein von einem Fahrzeughersteller hergestelltes Grund-Fahrzeug einen durch einen Campingfahrzeughersteller hergestellten Campingaufbau aufzusetzen. Dieser beispielsweise einen Wohnbereich, einen Sanitärbereich und einen Kochbereich umfassende Campingaufbau ist als von dem Grund-Fahrzeug im Wesentlichen unabhängig aufgebautes und zu betreibendes System ausgebildet und kann bzw. soll von der Funktionalität des Grund-Fahrzeugs weitestgehend unabhängig betrieben werden.

In einem derartigen Campingaufbau sind im Allgemeinen verschiedene zu bedienende Systembereiche, im Sinne der vorliegenden Erfindung Zusatzgeräte, vorgesehen. Ein derartiges Zusatzgerät kann beispielsweise eine Standheizung sein, welche elektrisch betrieben oder mit Brennstoff betrieben unabhängig vom Betrieb des Grund-Fahrzeugs den Campingaufbau, beispielsweise auch das Wasser für den Sanitärbereich, erwärmen kann. Ein weiteres Zusatzgerät kann beispielsweise ein Videosystem, also beispielsweise ein Fernseher, sein. Auch ein Audiosystem kann als Zusatzgerät im Campingaufbau vorgesehen sein. Weitere Zusatzgeräte können im Kochbereich vorgesehen sein, beispielsweise in Form eines Herds, einer Mikrowelle, einer Spülmaschine oder dergleichen. Auch das Lichtsystem eines derartigen Campingaufbaus kann als ein durch eine Bedienperson zu bedienendes Zusatzgerät betrachtet werden.

Aufgrund der Vielzahl derartiger beispielsweise in einem Campingaufbau eines Fahrzeugs vorgesehenen, zueinander deutlich unterschiedliche Funktionalitäten bereitstellenden und somit auch in verschiedenster Weise zu bedienenden Zusatzgeräte, die auch von verschiedenen Lieferanten bereitgestellt werden, und aufgrund des Umstandes, dass für den Aufbau eines Campingaufbaus bei verschiedenen Arten der Zusatzgeräte zwischen Zusatzgeräten verschiedener Hersteller gewählt werden kann, ist es häufig erforderlich, für mehrere derartige Zusatzgeräte verschiedene Fernbedienungen bereitzuhalten, um diese auch aus der Ferne bedienen zu können. Beispielsweise sind für eine Standheizung einerseits und ein Videosystem andererseits im Allgemeinen unterschiedliche, auf die durch diese Zusatzgeräte bereitzustellenden Funktionalitäten abgestimmte Fernbedienungen vorgesehen.

Ein Fahrzeug mit einem Fahrzeugzusatzgeräte-Bediensystem gemäß dem Oberbegriff des Anspruchs 1 ist aus der US 2014/0210593 A1 bekannt. Bei diesem bekannten Fahrzeug kann eine Vielzahl von in dem Fahrzeug über ein Bus-Datenübertragungssystem kommunizierenden Systembereichen über eine in dem Fahrzeug vorgesehene Kommunikationseinheit und mit dieser drahtlos über ein Funk-Datenübertragungssystem kommunizierende Bedieneinheiten angesprochen werden.

Es ist die Aufgabe der vorliegenden Erfindung, ein Fahrzeug mit einem Fahrzeugzusatzgeräte-Bediensystem vorzusehen, welches eine vereinfachte Bedienung einer Mehrzahl von in einem Fahrzeug untergebrachten oder unterzubringenden Zusatzgeräten ermöglicht.

Gemäß der vorliegenden Erfindung wird diese Aufgabe gelöst durch ein Fahrzeug, umfassend ein Fahrzeuggeräte-Datenübertragungssystem zum Datenaustausch zwischen einer Mehrzahl von Fahrzeuggeräten und einer Mehrzahl von Fahrzeuggerät-Ansteuereinheiten und einer Mehrzahl von Fahrzeuggerät-Bedieneinheiten über ein Bus-Datenübertragungssystem, ferner umfassend ein Fahrzeugzusatzgeräte-Bediensystem.

Das Fahrzeugzusatzgeräte-Bediensystem umfasst:
- eine Mehrzahl von in einem Fahrzeug untergebrachten oder unterzubringenden Zusatzgeräten,
- eine Kommunikationseinheit,
- ein die Zusatzgeräte der Mehrzahl von Zusatzgeräten zum Datenaustausch mit der Kommunikationseinheit verbindendes Zusatzgeräte-Datenübertragungssystem,
- wenigstens eine mobile Bedieneinheit,
wobei die Kommunikationseinheit zum Datenaustausch mit der wenigstens einen mobilen Bedieneinheit vermittels eines ersten Funk-Datenübertragungssystems ausgebildet ist, und wobei die Kommunikationseinheit zum Datenaustausch mit einem Fern-Eingriffssystem vermittels eines zweiten Funk-Datenübertragungssystems ausgebildet ist.

Um ein voneinander unabhängiges Arbeiten der Fahrzeuggeräte einerseits und der Zusatzgeräte andererseits gewährleisten zu können, erfolgt zwischen dem Zusatzgeräte-Datenübertragungssystem und dem Fahrzeuggeräte-Datenübertragungssystem kein Datenaustausch.

Bei dem erfindungsgemäßen Fahrzeugzusatzgeräte-Bediensystem sind mehrere, vorzugsweise alle in einem Fahrzeug, wie zum Beispiel einem Campingfahrzeug, untergebrachte oder unterzubringende Zusatzgeräte über ein einziges Gerät, nämlich die Kommunikationseinheit, ansprechbar. Diese Kommunikationseinheit ist dazu eingerichtet bzw. kann beim Aufbau eines derartigen Fahrzeugzusatzgeräte-Bediensystems dazu eingerichtet werden, in Datenaustauschverbindung mit verschiedensten Zusatzgeräten zu treten. Auf diese Art und Weise kann die Kommunikationseinheit jedes der Zusatzgeräte ansprechen, um Bedienbefehle beispielsweise zum Aktivieren oder Deaktivieren eines jeweiligen Zusatzgerätes zu diesem zu senden, kann beispielsweise aber auch den Betriebszustand oder die Funktionalität eines Zusatzgeräts repräsentierende Information aus diesem Zusatzgerät auslesen und zur entsprechenden Auswertung zur Verfügung stellen.

Bei einem erfindungsgemäß aufgebauten Fahrzeug existieren also grundsätzlich zwei im Wesentlichen autark arbeitende und auch voneinander unabhängig betreibbare Datenübertragungssysteme. Über das Fahrzeuggeräte-Datenübertragungssystem kommunizieren all diejenigen Systembereiche eines Fahrzeugs, die für den Betrieb des Fahrzeugs vorgesehen und zu betreiben sind. Diese Systembereiche, im Sinne der vorliegenden Erfindung Fahrzeuggeräte, umfassen beispielsweise das Antriebsaggregat des Fahrzeugs, ein Heiz- bzw. Klimasystem des Fahrzeugs, Sicherheitssysteme, wie zum Beispiel auch eine Alarmanlage, und dergleichen. Über das Fahrzeugzusatzgeräte-Datenübertragungssystem kommunizieren im Wesentlichen unabhängig vom Betrieb des Fahrzeugs bzw. der für den Betrieb des Fahrzeugs erforderlichen Fahrzeuggeräte die Zusatzgeräte mit der Kommunikationseinheit und sind auf diese Art und Weise auch unabhängig vom Betrieb des Fahrzeugs durch eine Bedienperson ansprechbar.

Da Zusatzgeräte in teilweise schwer zugänglichen räumlichen Bereichen eines Fahrzeugs untergebracht sein können, wird vorgeschlagen, dass das Zusatzgeräte-Datenübertragungssystem ein drittes Funk-Datenübertragungssystem umfasst. Das Verlegen von Datenleitungen vor allem zu schwer zugänglichen Zusatzgeräten kann damit vermieden werden.

Aufgrund der Unterbringung in einem Fahrzeug kann grundsätzlich davon ausgegangen werden, dass der Abstand zwischen der Kommunikationseinheit und den über diese zu bedienenden Zusatzgeräten vergleichsweise gering ist. Aus diesem Grunde kann beispielsweise vorgesehen sein, das dritte Funk-Datenübertragungssystem ein Bluetooth-Datenübertragungssystem umfasst.

Alternativ oder zusätzlich kann beispielsweise dann, wenn nur ein vergleichsweise geringer, leicht zu überbrückender Abstand zwischen der Kommunikationseinheit und einem oder mehreren Zusatzgeräten vorhanden ist, vorgesehen sein, dass das Zusatzgeräte-Datenübertragungssystem ein leitungsgebundenes Datenübertragungssystem umfasst.

Auch das erste Funk-Datenübertragungssystem, also dasjenige Datenübertragungssystem, über welches die Kommunikationseinheit mit zumindest einer mobilen Bedieneinheit kommuniziert, kann ein Bluetooth-Datenübertragungssystem umfassen. Auch hier kann unterstellt werden, dass im Allgemeinen eine Bedienung der in einem Fahrzeug vorgesehenen Zusatzgeräte dann erfolgt, wenn die Bedienperson sich im Bereich eines derartigen Fahrzeugs aufhält.

Um auch einen Zugriff aus größerer Entfernung zu ermöglichen, wird vorgeschlagen, dass das zweite Datenübertragungssystem ein Mobilfunk-Datenübertragungssystem umfasst. Somit ist die Möglichkeit geschaffen, über ein herkömmliches Mobiltelefonnetz mit der Kommunikationseinheit und über diese mit den Zusatzgeräten in Verbindung zu treten, beispielsweise um Bedienbefehle zu diesen zu übertragen oder den Zustand der Zusatzgeräte repräsentierende Information zu dem Fern-Eingriffssystem zu senden.

Dieses Fern-Eingriffssystem kann beispielsweise zum Zugriff über das Internet ausgebildet sein. Es ist somit die Möglichkeit geschaffen, über das Internet bzw. über auf einem Server gespeicherte Betriebsprogramme des Fern-Eingriffssystems auf die Zusatzgeräte einzuwirken bzw. in diesen Betriebsprogrammen Informationen zu hinterlegen, auf welche beispielsweise auch eine Werkstatt, ein Flottenmanager oder ein Mobilitätsservice eines Fahrzeugherstellers zugreifen kann, um bei Bedarf in das System eingreifen zu können oder bei durchzuführenden Wartungs- oder Reparaturarbeiten Information über den im Bereich eines oder mehrerer Zusatzgeräte möglicherweise bestehenden Wartungs- oder Reparaturbedarf zur Verfügung zu haben,

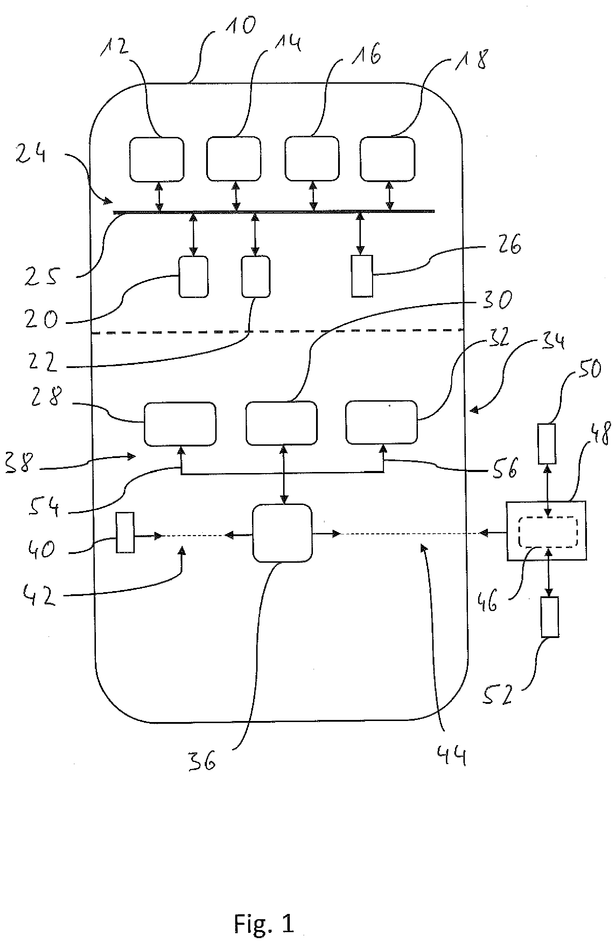

Die vorliegende Erfindung wird nachfolgend mit Bezug auf die beiliegende Fig. 1 detailliert beschrieben, welche in bockbildartiger Darstellung den Aufbau eines mit einer Mehrzahl von Zusatzgeräten ausgestatteten Fahrzeugs darstellt.

In Fig. 1 ist ein Fahrzeug allgemein mit 10 bezeichnet. Das Fahrzeug 10 kann beispielsweise ein Campingfahrzeug sein, bei welchem auf ein durch einen Fahrzeughersteller geliefertes Grund-Fahrzeug durch einen Campingfahrzeughersteller ein Campingaufbau aufgebaut bzw. aufgesetzt wird. Das Fahrzeug 10 bzw. das Grund-Fahrzeug umfasst eine Mehrzahl von für den Betrieb desselben erforderlichen Fahrzeuggeräten 12, 14, 16, 18. Diese Fahrzeuggeräte 12, 14, 16, 18 können beispielsweise das Antriebsaggregat, also beispielsweise eine Brennkraftmaschine, das Heiz- bzw. Klimasystem, eine Alarmanlage oder sonstige im Fahrzeug anzusteuernde Systembereiche, wie z. B. elektrische Fensterheber, ein Schiebedach oder dergleichen umfassen. Um diese verschiedenen Fahrzeuggeräte 12, 14, 16, 18 in geeigneter Weise zu betreiben bzw. in Betrieb zu setzen, sind in einem derartigen Fahrzeug 10 im Allgemeinen mehrere Fahrzeuggerät-Ansteuereinheiten 20, 22 vorgesehen. Hier kann beispielsweise eine definierte Zuordnung einer Fahrzeuggerät-Ansteuereinheit zu einem Fahrzeuggerät vorhanden sein. Grundsätzlich besteht auch die Möglichkeit, dass durch eine derartige Fahrzeuggerät-Ansteuereinheit mehrere Fahrzeuggeräte angesprochen werden oder dass ein Fahrzeuggerät von mehreren Fahrzeuggerät-Ansteuereinheiten Ansteuerbefehle erhalten kann.

Die Fahrzeuggerät-Ansteuereinheiten 20, 22 kommunizieren mit den Fahrzeuggeräten 12, 14, 16, 18 über ein in einem derartigen Fahrzeug 10 vorgesehenes Fahrzeuggeräte-Datenübertragungssystem 24, welches im Allgemeinen ein leitungsgebundenes Datenübertragungssystem 25, beispielsweise ein Bus-Datenübertragungssystem, umfasst. Ferner kann über dieses Fahrzeuggeräte-Datenübertragungssystem 24 auch eine Kommunikation zwischen einer oder mehreren Fahrzeuggerät-Bedieneinheiten 26 und den Fahrzeuggerät-Ansteuereinheiten 20, 22 oder/und den Fahrzeuggeräten 12, 14, 16, 18 erfolgen. Eine derartige oder mehrere derartige Fahrzeuggerät-Bedieneinheiten 26 können beispielsweise im Bereich eines Armaturenbretts, eines Lenkrads oder der Türen eines Fahrzeugs untergebracht sein, um für den Betrieb eines oder mehrerer Fahrzeuggeräte 12, 14, 16, 18 erforderliche Bedienbefehle eingeben zu können. Beispielsweise kann eine derartige Fahrzeuggerät-Bedieneinheit 26 im einfachsten Falle als Schalter ausgebildet sein, mit welchem beispielsweise ein Licht, ein Scheibenwischer oder ein elektrischer Fensterheber aktiviert oder deaktiviert werden kann. Bei komplexerer Ausgestaltung kann eine derartige Fahrzeuggerät-Bedieneinheit 26 als Touch-Screen ausgebildet sein, um beispielsweise unter menügeführter Auswahl verschiedene Fahrzeuggeräte ansprechen zu können bzw. für verschiedene Fahrzeuggeräte geeignete Bedienbefehle eingeben zu können. Über das Fahrzeuggeräte-Datenübertragungssystem 24 kommunizieren somit alle für den Betrieb des Fahrzeugs 10 vorgesehenen bzw. erforderlichen Systembereiche miteinander.

Beispielsweise bei Ausgestaltung als Campingfahrzeug sind am Fahrzeug 10 mehrere Zusatzgeräte 28, 30, 32 vorgesehen. Diese können beispielsweise eine elektrisch oder mit Brennstoff betriebene Standheizung, ein Videosystem, ein Audiosystem, in einem Kochbereich untergebrachte Geräte, ein Beleuchtungssystem oder dergleichen umfassen.

In Zuordnung zu diesen beispielsweise mit einem Campingaufbau auf ein Grund-Fahrzeug aufgebauten Zusatzgeräten 28, 30, 32 bzw. eines diese umfassenden Fahrzeugzusatzgeräte-Bediensystems 34 ist eine Kommunikationseinheit 36 vorgesehen. Diese steht mit den Zusatzgeräten 28, 30, 32 über ein Zusatzgeräte-Datenübertragungssystem 38 in Verbindung bzw. kann über dieses Zusatzgeräte-Datenübertragungssystem 38 mit den verschiedenen Zusatzgeräten 28, 30, 32 in Verbindung treten. Über die Kommunikationseinheit 36 werden den Fahrzeugzusatzgeräten 28, 30, 32 für deren Betrieb relevante Betriebsbefehle übermittelt. Beispielsweise kann eine ein Zusatzgerät bereitstellendes Standheizung ein- bzw. ausgestaltet werden. Auch das Videosystem oder das Audiosystem eines derartigen Fahrzeugs 10 kann gemäß den Vorgaben einer Bedienperson über die Kommunikationseinheit 36 angesteuert werden.

Um eine derartige Interaktion einer Bedienperson zu ermöglichen, umfasst das Fahrzeugzusatzgeräte-Bediensystem 34 ferner zumindest eine mobile Bedieneinheit 40. Diese beispielsweise in Form eines Smartphones oder eines Tabletcomputers bereitgestellte mobile Bedieneinheit 40 kann mit der Kommunikationseinheit 36 über ein erstes Funk-Datenübertragungssystem 42 in Verbindung treten. Beispielsweise kann dieses erste Funk-Datenübertragungssystem 42 ein Bluetooth-Datenübertragungssystem umfassen, welches besonders für die Funk-Datenübertragung über vergleichsweise kurze Entfernungen von einigen Metern geeignet ist. Über die mobile Bedieneinheit 40 können der Kommunikationseinheit 36 die für die Ansteuerung der verschiedenen Zusatzgeräte 28, 30, 32 erforderlichen Ansteuerbefehle zugeführt werden. Auch kann die Kommunikationseinheit 36 der mobilen Bedieneinheit 40 Information zusenden, welche diese über das Zusatzgeräte-Datenübertragungssystem 38 empfangen hat und welche beispielsweise den Betriebszustand eines oder mehrerer der Zusatzgeräte 28, 30, 32 repräsentiert.

Über ein zweites Funk-Datenübertragungssystem 44 kann die Kommunikationseinheit 36 in Verbindung mit einem Fern-Eingriffssystem 46 treten. Das zweite Funk-Datenübertragungssystem 44 kann beispielsweise als Mobilfunk-Datenübertragungssystem ausgestaltet sein und somit eine Kommunikation zwischen der Kommunikationseinheit 36 und dem Fern-Eingriffssystem 46 über ein nahezu überall verfügbares Mobiltelefonnetz ermöglichen.

Das Fern-Eingriffssystem 46 kann beispielsweise auf einem Server hinterlegte Bedienprogramme umfassen, auf welche somit über das in Fig. 1 nur schematisch dargestellte Internet 48 zugegriffen werden kann. Vermittels einer oder mehrerer Zugriffseinheiten 50, 52, beispielsweise wiederum ausgebildet als Smartphone, Tabletcomputer oder PC, kann somit über das Internet 48 auf das Fern-Eingriffssystem 46 zugegriffen werden, um einerseits über das Fern-Eingriffssystem 46 und das zweite Funk-Datenübertragungssystem 44 Ansteuerbefehle an die Kommunikationseinheit 36 und über diese zu einzelnen der Zusatzgeräte 28, 30, 32 zu senden, andererseits über die Kommunikationseinheit 36 Information auszulesen, welche den Betriebszustand eines oder mehrerer der Zusatzgeräte 28, 30, 32 repräsentiert und ggf. auch einen möglicherweise bestehenden Wartungs- oder Reparaturbedarf anzeigt. Somit besteht über das Fern-Eingriffssystem 46 nicht nur für eine ggf. sich auch im Bereich des Fahrzeugs 10 aufhaltende Bedienperson ein weiterer Kommunikationspfad mit der Kommunikationseinheit 36, sondern es besteht auch die Möglichkeit, das Dritte, wie z. B. ein Flottenmanager, eine Werkstatt oder ein Mobilitätsservice eines Fahrzeugherstellers auf diese Informationen zugreifen und erforderlichenfalls in das System eingreifen bzw. bei Durchführung von Wartungs- oder Reparaturarbeiten dafür möglicherweise relevante Informationen zur Verfügung gestellt bekommen.

Das Zusatzgeräte-Datenübertragungssystem 38 kann bei einer besonders vorteilhaften Ausgestaltung als drittes Funk-Datenübertragungssystem 54, insbesondere auch als Bluetooth-Datenübertragungssystem, ausgebildet sein. Auf diese Art und Weise kann eine einfache Datenaustauschverbindung zwischen der Kommunikationseinheit 36 und den oder zumindest einigen der Zusatzgeräte 28, 30, 32 bereitgestellt werden. Da für die Kommunikation mit der mobilen Bedieneinheit 40 vorzugsweise ein derartiges Bluetooth-Datenübertragungssystem bereits bereitgestellt ist, kann letztendlich durch das gleiche System auch die Kommunikation zwischen der Kommunikationseinheit 36 und den auf diese Art und Weise ansprechbaren Zusatzgeräten erfolgen.

Bei einer alternativen Ausgestaltung kann das Zusatzgeräte-Datenübertragungssystem 38 als leitungsgebundenes Datenübertragungssystem 56 ausgebildet sein. Dies ist vor allem dann möglich, wenn die auf diese Art und Weise anzusprechenden Zusatzgeräte leicht zugänglich sind und somit die für die Übertragung von Daten bzw. Informationen erforderlichen Leitungen bzw. Kabel leicht zwischen der Kommunikationseinheit 36 und den betroffenen Zusatzgeräten verlegt werden können. Selbstverständlich ist es auch möglich, einige der Zusatzgeräte über das dritte Funk-Datenübertragungssystem 54 mit der Kommunikationseinheit 36 zu koppeln und einige der Zusatzgeräte über das leitungsgebundene Datenübertragungssystem 56 mit der Kommunikationseinheit 36 zu koppeln. Auch ein derartiges leitungsgebundenes Datenübertragungssystem 56 kann beispielsweise als Bus-Datenübertragungssystem ausgebildet sein.

Beim Aufbau eines derartigen Fahrzeugzusatzgeräte-Bediensystems 56 kann, nachdem feststeht, welche Zusatzgeräte von welchem Hersteller in das System integriert werden sollen, die Kommunikationseinheit 36 mit einem oder mehreren Betriebsprogrammen ausgestattet werden, welche die Kommunikation mit diesen speziell ausgewählten Zusatzgeräten ermöglichen, um die für diese erforderlichen Bedienbefehle bzw. Informationen übertragen zu können. Beispielsweise können derartige nach Art von Gerätetreibern wirksame Bedienprogramme in der Kommunikationseinheit 36 hinterlegt sein und beim Aufbau des Fahrzeugzusatzgeräte-Bediensystems nur diejenigen aktiviert bzw. geladen werden, welche für die für das System vorgesehenen Zusatzgeräte erforderlich sind. Auch in der mobilen Bedieneinheit 40 können für die im Fahrzeugzusatzgeräte-Bediensystem 34 vorgesehenen Zusatzgeräte 28, 30, 32 vorgesehene Ansteuerprogramme beispielsweise in Form einer oder mehrerer Apps hinterlegt werden. Soll beispielsweise eine als Zusatzgerät vorgesehene Standheizung angesprochen werden, kann durch Aktivierung einer entsprechende App oder des der Standheizung zugeordneten Bereichs einer App die Möglichkeit geschaffen werden, einerseits einen Bedienbefehl in Richtung Kommunikationseinheit 36 und über diese zum entsprechenden Zusatzgerät, also zur Standheizung zu senden oder/und Informationen aus diesem Zusatzgerät auszulesen.

Aus der vorangehenden Beschreibung wird deutlich, dass das Fahrzeugzusatzgeräte-Bediensystem 34 ein vom restlichen Teil des Fahrzeugs 10, insbesondere den Fahrzeuggeräten 12, 14, 16, 18 und dem Fahrzeuggeräte-Datenübertragungssystem 24 im Wesentlichen unabhängiges und autark arbeitendes System bereitgestellt ist. Ein Datenaustausch zwischen diesen Bereichen des Fahrzeugs 10 ist grundsätzlich nicht erforderlich, so dass das Fahrzeuggeräte-Datenübertragungssystem 24 und das Zusatzgeräte-Datenübertragungssystem 38 grundsätzlich auch nicht zum Datenaustausch miteinander gekoppelt sind bzw. sein müssen. Dies ist insbesondere daher von Vorteil, da beim Aufbauen eines Campingaufbaus auf ein Grund-Fahrzeug auch keine Zugriffsmöglichkeit geschaffen werden muss, um eine derartige Verbindung zwischen dem Zusatzgeräte-Datenübertragungssystem 38 und dem Fahrzeuggeräte-Datenübertragungssystem 24 herstellen zu können. Andererseits gestattet diese voneinander entkoppelte Ausgestaltung den Betrieb des Fahrzeugzusatzgeräte-Bediensystems auch dann, wenn das Fahrzeuggeräte-Datenübertragungssystem bzw. die damit verkoppelten Systembereiche inaktiv sind. Die elektrische Energie für den Betrieb der Zusatzgeräte kann dabei beispielsweise aus der Fahrzeugbatterie, alternativ oder zusätzlich aus einer ausschließlich für deren Betrieb bereitgestellten Zusatzbatterie zugeführt werden.

## Patentansprüche

1. Fahrzeug, umfassend ein Fahrzeuggeräte-Datenübertragungssystem (24) zum Datenaustausch zwischen einer Mehrzahl von Fahrzeuggeräten (12, 14, 16, 18) und einer Mehrzahl von Fahrzeuggerät-Ansteuereinheiten (20, 22) und einer Mehrzahl von Fahrzeuggerät-Bedieneinheiten (26), wobei das Fahrzeuggeräte-Datenübertragungssystem (24) ein Bus-Datenübertragungssystem umfasst, ferner umfassend ein Fahrzeugzusatzgeräte-Bediensystem (34), das Fahrzeugzusatzgeräte-Bediensystem, umfassend:
- eine Mehrzahl von in einem Fahrzeug untergebrachten oder unterzubringenden Zusatzgeräten (28, 30, 32),
- eine Kommunikationseinheit (36),
- ein die Zusatzgeräte (28, 30, 32) der Mehrzahl von Zusatzgeräten (28, 30, 32) zum Datenaustausch mit der Kommunikationseinheit (36) verbindendes Zusatzgeräte-Datenübertragungssystem (38),
- wenigstens eine mobile Bedieneinheit (40),
wobei die Kommunikationseinheit (36) zum Datenaustausch mit der wenigstens einen mobilen Bedieneinheit (40) vermittels eines ersten Funk-Datenübertragungssystems (42) ausgebildet ist, und wobei die Kommunikationseinheit (36) zum Datenaustausch mit einem Fern-Eingriffssystem (46) vermittels eines zweiten Funk-Datenübertragungssystems (44) ausgebildet ist, **dadurch gekennzeichnet, dass** zwischen dem Zusatzgeräte-Datenübertragungssystem (38) und dem Fahrzeuggeräte-Datenübertragungssystem (24) kein Datenaustausch erfolgt.

2. Fahrzeug nach Anspruch 1, **dadurch gekennzeichnet, dass** das Zusatzgeräte-Datenübertragungssystem (38) ein drittes Funk-Datenübertragungssystem (54) umfasst.

3. Fahrzeug nach Anspruch 1 oder 2, **dadurch gekennzeichnet, dass** das dritte Funk-Datenübertragungssystem (54) ein Bluetooth-Datenübertragungssystem umfasst.

4. Fahrzeug nach einem der vorangehenden Ansprüche, **dadurch gekennzeichnet, dass** das Zusatzgeräte-Datenübertragungssystem (38) ein leitungsgebundenes Datenübertragungssystem (56) umfasst.

5. Fahrzeug nach einem der vorangehenden Ansprüche, **dadurch gekennzeichnet, dass** das erste Funk-Datenübertragungssystem (42) ein Bluetooth-Datenübertragungssystem umfasst.

6. Fahrzeug nach einem der vorangehenden Ansprüche, **dadurch gekennzeichnet, dass** das zweite-Datenübertragungssystem (44) ein Mobilfunk-Datenübertragungssystem umfasst.

7. Fahrzeug nach einem der vorangehenden Ansprüche, **dadurch gekennzeichnet, dass** das Fern-Eingriffssystem (46) zum Zugriff über das Internet (48) ausgebildet ist.

## Claims

1. Vehicle, comprising a vehicle device data transmission system (24) for the exchange of data between a plurality of vehicle devices (12, 14, 16, 18) and a plurality of vehicle device actuating units (20, 22) and a plurality of vehicle device operating units (26), wherein the vehicle device data transmission system (24) comprises a bus data transmission system, further comprising a vehicle accessory device operating system (34) , the vehicle accessory device operating system comprising:
- a plurality of accessory devices (28, 30, 32) housed or to be housed in a vehicle,
- a communication unit (36),
- an accessory device data transmission system (38) connecting the accessory devices (28, 30, 32) of the plurality of accessory devices (28, 30, 32) for the exchange of data with the communication unit (36), and
- at least one mobile operating unit (40),
wherein the communication unit (36) is configured for the exchange of data with the at least one mobile operating unit (40) by means of a first wireless data transmission system (42), and wherein the communication unit (36) is configured for the exchange of data with a remote access system (46) by means of a second wireless data transmission system (44), **characterized in that** no exchange of data takes place between the accessory device data transmission system (38) and the vehicle device data transmission system (24).

2. Vehicle in accordance with claim 1, **characterized in that** the accessory device data transmission system (38) comprises a third wireless data transmission system (54).

3. Vehicle in accordance with claim 1 or 2, **characterized in that** the third wireless data transmission system (54) comprises a Bluetooth data transmission system.

4. Vehicle in accordance with one of the above claims, **characterized in that** the accessory device data transmission system (38) comprises a wired data transmission system (56).

5. Vehicle in accordance with one of the above claims, **characterized in that** the first wireless data transmission system (42) comprises a Bluetooth data transmission system.

6. Vehicle in accordance with one of the above claims, **characterized in that** the second wireless data transmission system (44) comprises a mobile wireless data transmission system.

7. Vehicle in accordance with one of the above claims, **characterized in that** the remote access system (46) is configured for access over the Internet (48).

## Revendications

1. Véhicule comprenant un système de transmission de données de dispositif de véhicule (24) pour l'échange de données entre une pluralité de dispositifs de véhicule (12, 14, 16, 18) et une pluralité d'unités d'actionnement de dispositif de véhicule (20, 22) et une pluralité d'unités d'exploitation de dispositif de véhicule (26), dans lequel le système de transmission de données de dispositif de véhicule (24) comprend un système de transmission de données BUS, comprenant en outre un système d'exploitation de dispositif accessoire de véhicule (34) , le système d'exploitation de dispositif accessoire de véhicule comprenant :
- une pluralité de dispositifs accessoires (28, 30, 32) logés ou destinés à être logés dans un véhicule,
- une unité de communication (36),
- un système de transmission de données de dispositif accessoire (38) reliant les dispositifs accessoires (28, 30, 32) de la pluralité de dispositifs accessoires (28, 30, 32) pour l'échange de données avec l'unité de communication (36), et
- au moins une unité d'exploitation mobile (40),
dans lequel l'unité de communication (36) est configurée pour l'échange de données avec ledit au moins une unité d'exploitation mobile (40) au moyen d'un premier système de transmission de données sans fil (42), et dans lequel l'unité de communication (36) est configurée pour l'échange de données avec un système d'accès à distance (46) au moyen d'un deuxième système de transmission de données sans fil (44), **caractérisé en ce qu'**aucun échange de données n'a lieu entre le système de transmission de données de dispositif accessoire (38) et le système de transmission de données de dispositif de véhicule (24).

2. Véhicule selon la revendication 1, **caractérisé en ce que** le système de transmission de données de dispositif accessoire (38) comprend un troisième système de transmission de données sans fil (54).

3. Véhicule selon la revendication 1 ou 2, **caractérisé en ce que** le troisième système de transmission de données sans fil (54) comprend un système de transmission de données Bluetooth.

4. Véhicule selon l'une des revendications précédentes, **caractérisé en ce que** le système de transmission de données de dispositif accessoire (38) comprend un système de transmission de données câblé (56).

5. Véhicule selon l'une des revendications précédentes, **caractérisé en ce que** le premier système de transmission de données sans fil (42) comprend un système de transmission de données Bluetooth.

6. Véhicule selon l'une des revendications précédentes, **caractérisé en ce que** le deuxième système de transmission de données sans fil (44) comprend un système mobile de transmission de données sans fil.

7. Véhicule selon l'une des revendications précédentes, **caractérisé en ce que** le système d'accès à distance (46) est configuré pour l'accès par Internet (48).
